# EUROPEAN PATENT APPLICATION

(11) **EP 4 790 446 A1**
(43) Date of publication of application: **12.08.2026**
(21) Application number: 26154252.6
(22) Date of filing: 27.01.2026
(51) Int. Cl.: G01S 7/02, G01S 7/35, G01S 13/34, G01S 13/42, G01S 13/58, G01S 13/87, G01S 13/931

(54) **OFFSET CORRECTION TECHNIQUES IN DISTRIBUTED RADAR SYSTEMS**

(30) Priority: 05.02.2025 US 202519046247
(71) Applicant: NXP USA, Inc., Austin, TX 78735 (US)
(72) Inventor: Ibrahim, Alaa Salaheldin Gomaa, 5656AG Eindhoven (NL); Bekooij, Marco Jan Gerrit, 5656AG Eindhoven (NL)
(74) Representative: Schwarzweller, Thomas

(57) **Abstract**

A distributed radar system includes a reference clock source, a first radar front end, and a second radar front end. The reference clock source is configured to generate a reference clock signal. The first radar front end is configured to generate a first radar chirp signal based on the reference clock signal received from the reference clock source. The second radar front end is configured to generate a second radar chirp signal by modulating a time period between consecutive chirps in the second radar chirp signal based on a second frequency signal that is generated by upconverting the reference clock signal received from the reference clock source.

## Description

### BACKGROUND

Many systems rely on radar to provide accurate information of the surrounding environment. For example, modem vehicles employ radar to implement Advanced Driving Assistance Systems (ADAS) and Autonomous Driving (AD) systems that perform functions such as adaptive cruise control, automated steering, and emergency braking. In some cases, vehicular radar systems use radar modulation schemes (e.g., Frequency Modulated Continuous Waveform (FMCW) radar) that modulate the frequency of a radar signal in sequences commonly referred to as radar chirps, or chirps for short, in the 76 gigahertz (GHz) to 81 GHz frequency band. Radar systems using these types of radar modulation schemes sense the surrounding environment by transmitting the sequence of chirps, receiving reflections of the chirps after they reflect off of one or more objects, and processing the received reflections to obtain a range profile of the one or more objects as well as the velocities of the objects. In order to provide a more robust and accurate perception of the surrounding environment, radar systems employ various radar transmission and signal processing techniques.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIGs. 1 and 2 show examples of a radar front end and a radar master controller processing unit, respectively, in a radar system with a transmission configuration configured to minimize frequency and timing offsets between radar front ends, in accordance with various embodiments.
FIG. 3 shows an example of a vehicular control system including a distributed radar system, such as the radar system of FIGs. 1 and 2, in accordance with various embodiments.
FIG. 4 shows an example of a radar front end with components to minimize or eliminate the frequency and/or timing offsets with other radar front ends in a distributed radar system, in accordance with various embodiments.
FIG. 5 shows a first graph illustrating a first chirp sequence transmitted by a first radar front end and a second graph illustrating a second chirp sequence transmitted by a second radar front end in a distributed radar system according to a conventional technique with a similar dwell time setting in both radar front ends.
FIG. 6 shows a first graph illustrating a first chirp sequence transmitted by a first radar front end and a second graph illustrating a second chirp sequence transmitted by a second radar front end according to some embodiments with different dwell time settings in the radar front ends.
FIG. 7 shows an example of a flowchart illustrating a method for generating a radar chirp signal based on a higher frequency signal to modulate the dwell time between chirps, in accordance with various embodiments.

### DETAILED DESCRIPTION

Some radar systems include multiple radar sensors (also referred to herein as "radar front ends" or "radar heads") to increase the perception of the surrounding environment. For example, a Distributed Coherent Radar (DCR) FMCW radar system employs multiple radar front ends and combines the reflections received at the radar front ends to improve the angular resolution of the radar system. In some cases, the radar system seeks to improve the coherency of the combined reflections by estimating and compensating for a frequency offset between the multiple radar front ends. The frequency offset results from each radar front end having its own crystal oscillator that provides a reference clock signal for the chirp generator phase-locked loop (PLL) circuitry in the radar front end and for the radar front end's timing engine which controls a slope of the chirps and the sampling moments of the analog-to-digital converter (ADC) in the radar front end's receive chain.

The present disclosure and accompanying figures provide techniques to minimize or eliminate the frequency and/or timing offsets between radar front ends by adapting the settings of an upconverter in one or more of the radar front ends to provide improved control of the "dwell time" (or a time period) between chirps in a radar chirp signal and of the center frequency of the chirps. In some embodiments, the techniques described herein implement the upconverter as a PLL circuitry to upconvert a lower frequency reference clock signal received at the radar front end to a higher frequency signal which is then utilized to provide more finely tuned control (e.g., in the scale of 1.5 nanoseconds) of the dwell time between consecutive chirps in the transmitted radar signal. By modulating the dwell time between chirps in the transmitted radar signal based on the higher frequency signal, the radar front end is better able to align the chirps in the transmitted radar signal with the corresponding chirps of another radar signal transmitted from another radar front end in the radar system. That is, by employing the higher frequency signal to provide improved dwell time control, the radar front end is able to align its transmitted chirps with those transmitted from another radar front end within a smaller tolerance threshold. The tolerance threshold is dependent on the frequency of the higher frequency signal. For example, for a higher frequency signal of 640 MHz, the tolerance threshold is approximately 1.5 nanoseconds, which is significantly less than a tolerance threshold of 25 nanoseconds if a conventional 40 MHz clock signal is used. In addition, the higher frequency signal is used to control the sampling start moment of the radar front end's ADC. By modulating the dwell time between chirps and the ADC sampling start moment based on the higher frequency signal in the radar front end, the techniques described herein increase the signal-to-noise ratio (SNR) of the received reflections, thereby improving the performance of the radar system without having to rely on costly hardware (e.g., more expensive crystal oscillators) and without introducing artifacts or noise that may degrade system performance.

In some embodiments, a distributed radar system includes a first radar front end and a second radar front end, each having its own reference clock source. The reference clock source of each radar front end is configured to generate a reference clock signal for the respective radar front end. The reference clock signal generated at the second radar front end has a known frequency offset with respect to the reference clock signal generated at the first radar front end. The first radar front end is configured to generate a first radar chirp signal based on the reference clock signal received from its reference clock source. The second radar front end is configured to generate a second radar chirp signal by modulating a time period between consecutive chirps in the second radar chirp signal based on a second frequency signal. The second radar front end generates the second frequency signal by upconverting the reference clock signal received from its reference clock source. For example, the second radar front end includes a PLL circuitry that receives the reference clock signal and generates the second frequency signal at a higher frequency. The second signal is input to a chirp generator circuitry at the second radar front end to generate the second radar chirp signal. The second signal, in some embodiments, is also input to the second radar front end's timing engine to control the start moment for each of the chirps in the second radar chirp signal and to set the sampling start moment of the second radar front end's ADC. For example, the timing engine utilizes the second signal (which is at a higher frequency than the reference clock signal) to more finely control the number of clock cycles between consecutive chirps in the second radar chirp signal based on the known frequency offset with the first radar front end. That is, for example, the timing engine can control or adjust the number of clock cycles between consecutive chirps in the second radar signal based on the higher frequency second signal. In this manner, the second radar front end is able to generate and transmit the second radar chirp signal with chirps that are more closely aligned (e.g., in the time and/or frequency domain) within a tolerance threshold to the chirps in the first radar chirp signal transmitted by the first radar front end. This increases the SNR of the received reflections, thereby improving system performance.

In some embodiments, any of the elements, components, or blocks shown in the ensuing figures are implemented as one of software executing on a processor, hardware that is hard-wired (e.g., circuitry) to perform the various operations described herein, or a combination thereof. For example, one or more of the described blocks or components (e.g., blocks or components associated with the techniques described herein) represent software instructions that are executed by hardware such as a digital signal processor, an application-specific integrated circuit (ASIC), a set of logic gates, a field programmable gate array (FPGA), programmable logic device (PLD), a hardware accelerator, a parallel processor, or any other type of hardcoded or programmable circuit. As another example, one or more of the described blocks or components represent hardware such as a PLL circuitry.

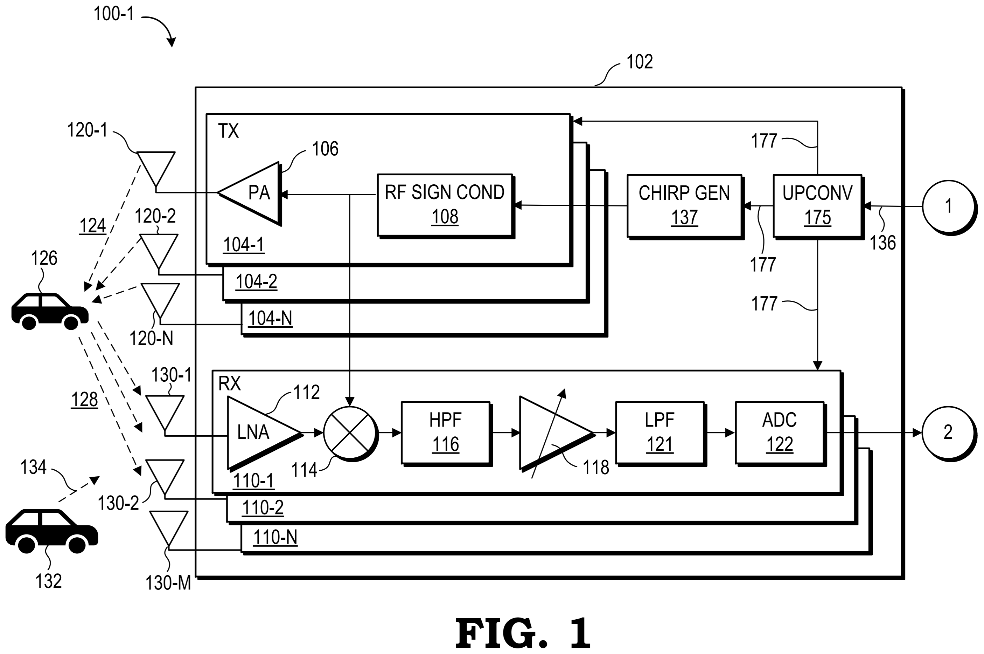

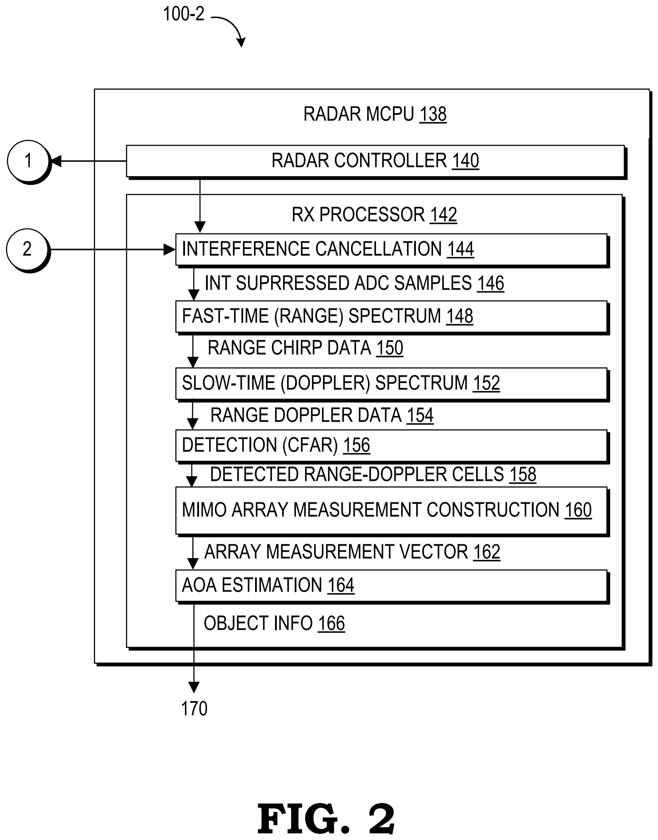

FIGs. 1 and 2 show an example of a radar system 100 (including a first radar system portion 100-1 of FIG. 1 and a second radar system portion 100-2 of FIG. 2) that implements techniques to minimize or eliminate the frequency and timing offsets between radar front ends in accordance with various embodiments. FIG. 1 shows a radar front end 102 of the radar system 100 and FIG. 2 shows a radar master controller processing unit (MCPU) 138 of the radar system 100.

Referring to FIG. 1, in some embodiments, the radar front end 102 includes multiple transmitters 104-1 to 104-N (collectively referred to as transmitters 104). In some embodiments, each transmitter 104 includes a power amplifier (PA) 106 and a radio frequency (RF) signal (sign) conditioning (cond) component 108. The PA 106 converts a lower power RF signal into a higher power RF signal prior to transmission. For example, in some embodiments, the PA 106 is configured to convert a lower power RF signal including a plurality of chirps into a higher power RF signal. The RF conditioning component 108 includes hardware and/or software for modifying (i.e., conditioning) the signal received from the chirp generator 137 prior to providing it to the PA 106. For example, in some embodiments, the RF conditioning component 108 includes one or more filters that filter the RF signals prior to signal power amplification at the PA 106.

In some embodiments, the radar front end 102 receives program, control trigger, and radar system reference clock signals 136 that are utilized for chirp generation at a chirp generator 137 or received signal processing in the receivers 110. For example, the reference clock signal is a local oscillator (LO) signal and the control trigger is a chirp start trigger signal that are input to the chirp generator 137 to generate radar chirp sequences that are further processed (e.g., by the RF signal conditioning component 108 and the PA 106) before being transmitted by the transmit antennas 120 of the radar front end 102. The chirp generator 137 is configured to generate one or more radar chirp sequences for each one of the transmitters 104-1 to 104-N. For example, the chirp generator 137 is configured to generate a single radar chirp sequence that the chirp generator 137 transmits to each one of the transmitters 104-1 to 104-N. In some embodiments, the chirp generator 137 includes a phase locked loop (PLL) that generates linear frequency modulated chirp sequences. For example, the PLL in the chirp generator 137 generates an FMCW chirp sequence for transmission by the transmitters 104. In the illustrated embodiment, the transmit signal generation component is a chirp generator 137. In other embodiments, the transmit signal generation component is a pulse generator or a digital radar modulation component. Thus, while the following embodiments describe transmission and signal processing techniques with respect to chirp-based radar waveforms, in other embodiments, the transmit power shaping and signal processing techniques can also be applied to pulse-based and digitally modulated radar waveforms as well.

The radar front end 102 also includes transmission antennas 120. In some embodiments, each transmitter 104 is configured with its own transmission antenna 120 (i.e., transmitter 104-1 with transmission antenna 120-1, transmitter 104-2 with transmission antenna 120-2, transmitter 104-3 with transmission antenna 120-3, and transmitter 104-N with transmission antenna 120-N). The transmitters 104 send transmitted signals 124 toward one or more objects 126 (one shown for clarity). The transmitted signals are reflected from the object 126, and the object reflected signals 128 (also referred to herein as "radar reflections" or reflections for short) are directed back to the radar system 100. The reflections 128 are received by reception antennas 130-1 to 130-M. In some embodiments, each receiver 110 is configured with its own reception antenna 130 (i.e., receiver 110-1 with reception antenna 130-1, receiver 110-2 with reception antenna 130-2, receiver 110-3 with reception antenna 130-3, receiver 110-M with reception antenna 130-M). Along with receiving the object reflect signals 128, the receivers 110 may receive other unwanted signals. For example, an interferer 132 (in this example, radar signals from another vehicle) transmits interference 134 which is also received by the receivers 110.

In some embodiments, the radar front end 102 also includes multiple receivers 110-1 to 110-M (collectively referred to as receivers 110). One or more of the receivers 110 includes a low noise amplifier (LNA) 112, a deramp mixer 114, a high pass filter (HPF) 116, a power amplifier 118, a low pass filter (LPF) 121, and an analog-to-digital converter (ADC) 122 that digitizes the received radar signal prior to providing it to a radar signal processor for estimating a range and velocity of the objects 126. In this manner, the ADC 122 of each one of the receivers 110-1 to 110-N generates a digitized received radar signal (indicated by the 2 in the circle) for a processor in a radar master controller processing unit as illustrated in FIG. 2.

Referring now to FIG. 2, in some embodiments, the radar system 100 includes a radar master controller processing unit (MCPU) 138. In some embodiments, the radar MCPU 138 includes a radar controller 140 and a receiver (RX) processor 142. The radar controller 140 provides the program, control trigger, and radar system reference clock signals 136 as described above. The receiver processor 142 receives the digitized signals from the radar front end 102, e.g., from the ADCs 122 of the receivers 110. In some embodiments, the RX processor 142 includes an interference cancellation component 144, which provides the interference suppressed ADC samples 146. A fast-time (Range) spectrum component 148 receives and processes the interference suppressed ADC samples 146. For example, the fast-time spectrum component 148 applies a first window in the fast-time to the interference suppressed ADC samples 146 and then applies an FFT over the fast-time of the windowed samples. In this manner, the fast-time spectrum component 148 provides a range chirp data 150 indicative of chirp reflections received at the reception antennas 130. In some embodiments, the range chirp data 150 is cubed with an x-axis and a y-axis made up of fast time data and a z-axis representing data for each of the reception antennas 130. The range chirp data 150 is received and processed by a slow-time (velocity, or Doppler) spectrum component 152. For example, the slow-time spectrum component 152 applies a second window in the slow-time to the range chirp data 150 and then applies an FFT over the slow-time of the windowed samples. In this manner, the slow time spectrum component 152 provides range-Doppler data 154 that is cubed with x-axis and y-axis made up of slow time data and a z-axis representing data for each of the reception antennas 130. In some embodiments, the range Doppler data 154 is received and processed by a constant false alarm rate (CFAR) detection component 156. The detection component 156 provides detected range and Doppler cell data 158. A multiple-input multiple-output (MIMO) array measurement construction component 160 receives and processes the detected range and Doppler cell data 158. The MIMO array measurement construction component 160 provides an array measurement vector 162. The array measurement vector is received and processed by an object Angle of Arrival (AoA) estimation component 164. The object AoA estimation component 164 provides object information 166 attributed to the object 126 detected by radar system 100 to other components via data interface 170. For example, the other components include software modules executed by a processor to implement advanced driver assistant system (ADAS) or autonomous driving (AD) perception and vehicular control systems.

In some embodiments, the radar system 100, including the radar front end 102 and the radar MCPU 138, is configured to perform the frequency and timing offset correction techniques described herein. For example, in some cases, the radar front end 102 is one of multiple radar front ends 102 and the radar system 100 is a distributed radar system. The radar front end 102 includes an upconversion circuitry 175 (also referred to herein as an "upconverter") to upconvert a radar front end 102 reference clock signal (e.g., generated by a local refence clock source at the radar front end 102) to a second signal 177 with a higher frequency that is input to the other components (e.g., the chirp generator 137) of the radar front end 102. The chirp generator 137 used the second signal 177 to modulate the dwell time between chirps of the generated radar chirp signal. For example, the chirp generator 137 modulates the dwell time between chirps so as to closer align the chirps with corresponding chirps of another radar chirp signal generated at another one of the radar front ends 102 in the distributed radar system 100. In this manner, the multiple radar front ends 102 transmit radar signals whose frequency and timing offsets are minimized or eliminated, which increases the performance of the radar system 100.

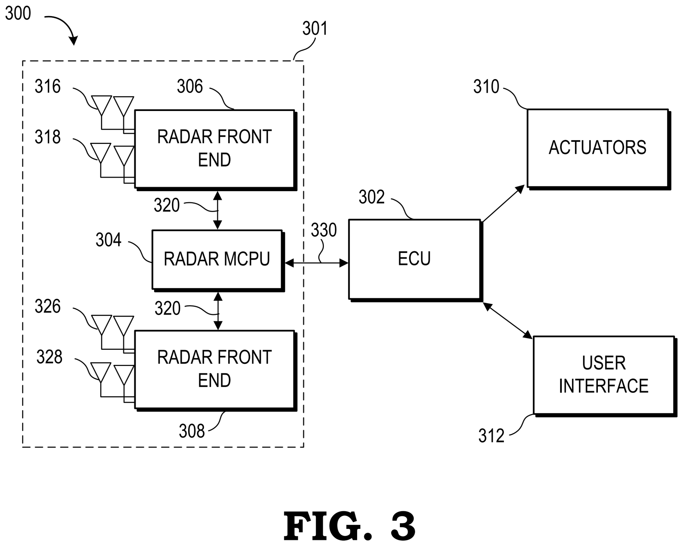

FIG. 3 shows an example of a vehicular control system 300 in accordance with some embodiments. The vehicular control system 300 is implemented, for example, in an automobile and may be used to assist in driver-assistance or autonomous driving functions. As illustrated, the vehicular control system 300 includes a distributed radar system 301 which includes radar front ends 306, 308 and a radar MCPU 304. In some embodiments, each of the radar front ends 306, 308 correspond to separate implementation of the radar front end 102 in FIG. 1 and radar MCPU 304 corresponds to radar MCPU 138 in FIG. 2.

In some embodiments, the vehicular control system 300 includes an electronic control unit (ECU) 302. The ECU 302 includes the radar MCPU 304 as well as other processing circuitry, e.g., a central processing unit (CPU), to perform various processing functions related to vehicular control. The radar MCPU 304 is coupled to radar front ends 306, 308 via interfaces 320. While two radar front ends 306, 308, are shown in FIG. 3, this number is for clarity purposes and may be scalable to a larger quantity. In some embodiments, the radar front ends 306, 308 are located at various positions around an automobile housing vehicular control system 300. For example, one radar front end 306 is positioned at the front end of the automobile and the other radar front end 308 is positioned at the rear end of the automobile. In some embodiments, radar front end 306 includes a plurality of antennas 316, 318. For example, plurality of antennas 316 are transmission antennas and plurality of antennas 318 are reception antennas. Similarly, in some embodiments for radar front end 308, the plurality of antennas 326 are transmission antennas and the plurality of antennas 328 are reception antennas. In some embodiments, the plurality of antennas associated with each of radar front ends 306, 308 support MIMO radar configurations. While two antennas are shown for each of the plurality of antennas 316, 318, 326, 328, this number is for clarity purposes and may be scalable to larger quantities (e.g., three, four, or more antennas) in some embodiments.

In some embodiments, the radar MCPU 304 is implemented as a micro-controller unit (MCU) or other processing unit that is configured to execute radar signal processing tasks such as, but not limited to, object identification, computation of object distance, object velocity, and object direction (collectively referred to as "radar information"). In some embodiments, the radar MCPU 304 is additionally configured to generate control signals based on the radar information. The radar MCPU 304 is, for example, configured to generate calibration signals, receive data signals, receive sensor signals, generate frequency spectrum shaping signals (such as signals associated with the FCMW radar techniques described herein) and/or state machine signals for RF circuit enablement sequences. In addition, in some embodiments, the radar MCPU 304 is configured to program the radar front ends 306, 308 to operate in a coordinated fashion by transmitting MIMO waveforms for use in constructing a virtual aperture from a combination of the distributed apertures formed by the plurality of transmission and reception antennas shown in FIG. 3.

The radar front ends 306, 308, in some embodiments, include radar front end chip circuitry that is coupled to the respective pluralities of antennas to transmit radar signals (e.g., in the form of radar chirp sequences), to receive reflected radar signals, and to digitize these received radar signals for forwarding to the radar MCPU 304 over interface 320. In some embodiments, the radar MCPU 304 performs radar processing tasks based on the digitized radar signals received from the radar front ends 306, 308 to provide radar information to the ECU 302. The ECU 302 uses this radar information to control one or more actuators 310 such as a steering actuator, braking actuator, or throttle actuator to assist in driver-assistance or autonomous driving functions. In some embodiments, the ECU 302 displays the radar information or associated information via a user interface 312 such as a screen display, a speaker, or a light (e.g., in a side mirror or on a dashboard) to alert the driver of nearby objects.

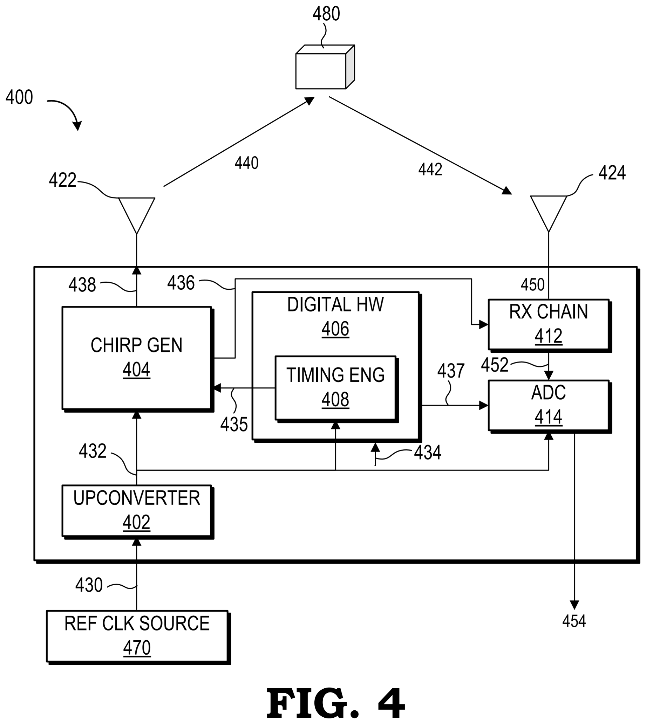

FIG. 4 shows an example of a radar front end 400 that employs frequency and timing offset minimization techniques in accordance with some embodiments. The radar front end 400, for example, corresponds to the radar front end 102 of FIG. 1 or one of the radar front ends 306, 308 of FIG. 3. In the illustrated embodiment, the radar front end 400 includes an upconverter 402, a chirp generator 404, a digital hardware 406 which implements a timing engine 408, a receive (Rx) chain 412, and an ADC 414. The radar front end 400 also includes one or more transmit antennas 422 (one shown for clarity purposes) and one or more receive antennas 424 (one shown for clarity purposes). In some embodiments, the upconverter 402 corresponds to the upconversion circuitry 175 of FIG. 1, the chirp generator 404 corresponds to the chirp generator 137 of FIG. 1, the transmit antenna 422 corresponds to the transmit antenna 120-1 of FIG. 1, the receive antenna corresponds to the receive antenna 130-1 of FIG. 1, the Rx chain 412 corresponds to components 112, 114, 116, 118, 121 of FIG. 1, and the ADC 414 corresponds to the ADC 122 of FIG. 1. In some cases, the radar front end 400 includes additional components not shown in the illustrated embodiment.

The upconverter 402 is configured to receive a reference clock signal 430 at a first frequency (e.g., 10-100 MHz). The reference clock signal 430 is, for example, generated by the radar front end's 400 reference clock 470. The upconverter 402 upconverts the lower-frequency reference clock signal 430 having the first frequency to a second signal 432 with a higher frequency. For example, if the reference clock signal 430 is 40 MHz, the upconverter 402 generates a second signal 432 of 640 MHz. The upconverter 402 outputs the second signal 432 to the chirp generator 404, the timing engine 408 in the digital hardware 406, and the ADC 414. In some embodiments, the upconverter 402 includes hardware, software, or a combination thereof, to perform the frequency upconversion. For example, in some cases, the upconverter 402 includes PLL circuitry such as a phase detector, a lowpass filter, and a voltage controlled oscillator (VCO) to generate the second signal 432 based on the received reference clock signal 430.

The digital hardware 406 includes hardware, software, or a combination thereof to implement the timing engine 408 for the radar front end 400. For example, the digital hardware 406 includes one or more processors or other circuitry that execute instructions associated with implementing the timing engine 408. The digital hardware 406 and the timing engine 408 generate timing control signals that are used by the other components in the radar front end 400 to perform various functions. For example, the timing engine 408 generates a chirp timing control signal 435 based on the second signal 432 received from the upconverter 402. The timing engine 408 outputs the chirp timing control signal 435 to the chirp generator 404 to control the amount of time (e.g., by controlling the number of clock cycles) between consecutive chirps (i.e., the dwell time) in a generated radar chirp signal 438. For example, in some embodiments, the timing engine 408 generates the chirp timing control signal to increase the number of clock cycles (thereby increasing the dwell time) between a pair of consecutive chirps in the generated radar chirp signal 438. In some cases, the increase in the number of clock cycles between consecutive chirps is constant (i.e., the same) between all of the chirps in the generated radar chirp signal 438. In other cases, the increase in the number of clock cycles between consecutive chirps is applied every x number of chirps, where x is a positive integer greater than 1, e.g., 2, 3, 4, or more. The digital hardware 406, in the illustrated embodiment, also generates an ADC control signal 437 that the digital hardware 406 outputs to the ADC 414, e.g., to control the sampling start moments of the ADC 414. In some cases, the digital hardware 406 is also configured to receive a chirp-train start signal 434 based on the second signal 432. In some cases, the chirp-train start signal 434 is an asynchronous chirp-train start signal with a particular jitter value. For example, if the second signal 432 is 640 MHz, then the jitter value in the chirp-train start signal 434 is 1.5 ns.

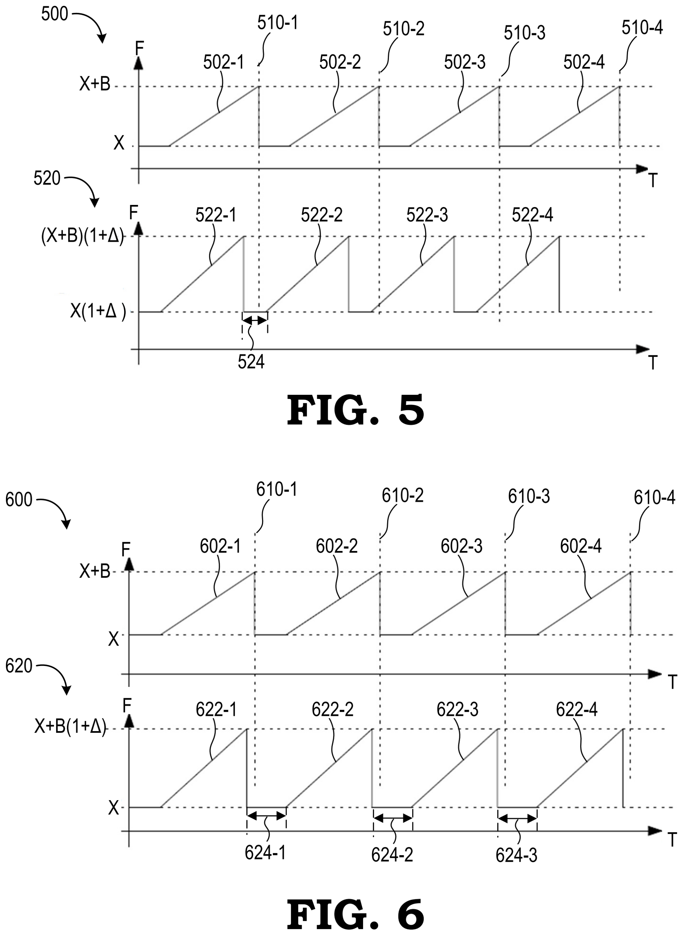

The chirp generator 404 receives the second signal 432 from the upconverter and the chirp timing control signal 435 from the timing engine 408 as inputs and generates a radar chirp signal 438 as an output. In some embodiments, the chirp generator 404 includes PLL circuitry such as a phase detector, a lowpass filter, and a VCO to generate the radar chirp signal 438. In the illustrated embodiment, the chirp generator 404 also generates an output signal 436 that is fed to the Rx chain 412 for processing the received radar reflection 442. For example, the output signal 436 is input to a mixer (such as one corresponding to the deramp mixer 114 of FIG. 1) in the Rx chain 412. The radar chirp signal 438 includes one or more radar frames with a plurality of chirps. For example, in some cases, a radar frame includes 256 chirps such as the chirps illustrated in FIG. 6. The chirp generator 404 generates the radar chirp signal 438 by modulating several parameters including one or more of a center frequency, a dwell-time between consecutive chirps, and a chirp-slope based on the received second signal 432 and/or the chirp timing control signal 435. Although not shown in the illustrated embodiment, in some cases, the radar front end 400 includes additional hardware between the chirp generator and the transmit antenna 422, e.g., such as hardware corresponding to the RF signal conditioning component 108 and the power amplifier 106 of FIG. 1.

The transmit antenna 422 transmits a radar signal 440 based on the radar chirp signal 438 received from the chirp generator 404 into the surrounding environment, and the receive antenna 424 receives a reflection 442 of the transmitted radar chirp signal 440 after it reflects from one or more objects 480 in the surrounding environment. The receive antenna 424 outputs a received radar reflection signal 450 to the Rx chain 412. The Rx chain 412 includes various processing and filtering component (e.g., a LNA such as the LNA 112 of FIG. 1, a deramp mixer such as the deramp mixer 114 of FIG. 1, a HPF such as the HPF 116 of FIG. 1, a power amplifier such as the power amplifier 118 of FIG. 1, and a LPF such as the LPF 121 of FIG. 1) that outputs signal 452 to the ADC 414, which samples the output signal 452 based on the other inputs (e.g., one or more of signals 437, 432) to generate a digital signal 454 that is output from the radar front end 400. For example, the digital signal 454 is transmitted to a radar MCPU such as the radar MCPU 138 of FIG. 2.

In some embodiments, the radar front end 400 is one of multiple radar front ends in a distributed radar system such as the radar system 300 of FIG. 3. The radar front end 400 is configured to compensate the frequency and/or timing offsets with the other radar front ends in the distributed radar system by modulating one or more of the center frequency and the dwell-time of the chirps in the transmitted radar signal 440 as well as implementing additional signal processing techniques. By employing the upconverter 402 to generate a higher frequency second signal 432 compared to the reference clock signal 430, the radar front end 400 is able to achieve a smaller granularity (e.g., in the scale of nanoseconds) for modulating the dwell-time between radar chirps so as to better align the chirps within a tolerance threshold (2 nanoseconds or less, for example, about 1.5-1.6 nanoseconds for a 640 MHz higher frequency second signal 432) with the other radar front ends in the radar system and for controlling the center frequency so as to minimize the frequency offset relative to the chirps of the other transmitted radar signals of the other radar front ends. In addition, the higher frequency second signal 432 provides an additional benefit of reducing the jitter in the chirp-train start signal 434.

Put differently, the radar front end 400 compensates for the crystal frequency offset due to tolerance and temperature differences between the crystals in the multiple radar front ends of a distributed radar system by implementing the upconverter 402 to generate a higher frequency signal (i.e., the second signal 432) that is used for chirp generation. Furthermore, the radar front end 400 does not introduce additional artifacts or distortion in the generated range-Doppler data (e.g., the range Doppler data 154 of FIG. 2) compared to conventional techniques that employ, for example, a digital crystal oscillator. Additionally, by using a high clock frequency (of the second signal 432) to drive the timing engine 408 in the digital hardware 406, the radar front end 400 is able to control the dwell time between chirps so as to reduce the timing offset compared to other radar front ends in the radar system.

FIG. 5 shows a first graph 500 illustrating a first chirp sequence 502 transmitted by a first radar front end and a second graph 520 illustrating a second chirp sequence 522 transmitted by a second radar front end in a distributed radar system according to a conventional technique with a similar dwell time setting in both radar front ends. The x-axis in the first graph 500 and the second graph 520 represents time and the y-axis in the first graph 500 and the second graph 520 represents frequency.

Referring to graph 500, the first chirp sequence 502 includes a first plurality of chirps 502-1, 502-2, 502-3, 502-4. The dwell time in the first chirp sequence 502 is the time period between consecutive chirps. The lines 510-1, 510-2, 510-3, 510-4 illustrate the ending time of each chirp of the first plurality of chirps 502-1, 502-2, 502-3, 502-4, respectively (i.e., the line 510-1 illustrates the starting point of the dwell time between chirp 502-1 and chirp 502-2, and the ending point of the dwell time between chirp 502-1 and chirp 502-2 is when chirp 502-2 starts). On the y-axis of graph 500, X represents the center frequency and X + B represents the center frequency (X) plus the chirp bandwidth (B).

Referring to graph 520, the second chirp sequence 522 includes a second plurality of chirps 522-1, 522-2, 522-3, 522-4. The dwell time in the second chirp sequence 522 is the time period between consecutive chirps. For example, the dwell time 524 between chirp 522-1 and chirp 522-2 is labeled. On the y-axis of graph 520, X(1+Δ) represents the center frequency (X) as affected by a frequency offset (Δ) relative to first chirp sequence 502 of graph 500, and (X+B)(1+ Δ) represents the center frequency (X) as affected by the frequency offset (Δ) and the chirp bandwidth (B) of the second chirp sequence 522.

In FIG. 5, a first radar front end in a distributed radar system transmits the first chirp sequence 502 and a second radar front end in the distributed radar system transmits the second chirp sequence 522 using the same dwell-time, PLL chirp-slope, and center frequency settings. However, the first radar front end and the second radar front end use a different crystal clock frequency due to the crystal clock frequency offset between the radar front ends. This difference in crystal clock frequency results in the frequency offset (Δ) of the center frequency of the chirps, an increase in the slope of the chirps of one chirp sequence relative to the other chirp sequence, and an increase in the maximum chirp bandwidth value as illustrated by the chirp bandwidth offset, δ. In addition, the difference in crystal clock frequency results in the start times of corresponding chirps of the first chirp sequence 502 and the second chirp sequence 522 drifting further apart from one another. That is, while the first chirp 502-1 in the first chirp sequence 502 and the first chirp 522-1 in the second chirp sequence 522 are aligned so as to overlap with one another during a time period (e.g., defined by the time period before line 510-1) in a radar frame, the ensuing chirps in the chirp sequences drift farther and farther apart from one another. For example, the fourth chirp 502-4 in the first radar chirp sequence 502 and the fourth chirp 522-4 in the second radar chirp sequence 522 only overlap one another over a relatively small portion, especially when compared to the first chirps 502-1, 522-1 in the respective chirp sequences 502, 522. This difference results in the first radar front end sampling the received radar reflections while the second radar front end is not transmitting. This decreases the SNR of the received radar reflections, thereby diminishing the performance of the radar system.

FIG. 6 shows a first graph 600 illustrating a first chirp sequence 602 transmitted by a first radar front end and a second graph 620 illustrating a second chirp sequence 622 transmitted by a second radar front end according to some embodiments with different dwell time settings in the radar front ends. The x-axis in the first graph 600 and the second graph 620 represents time and the y-axis in the first graph 600 and the second graph 620 represents frequency.

Referring to graph 600, the first chirp sequence 602 includes a first plurality of chirps 602-1, 602-2, 602-3, 602-4. The dwell time in the first chirp sequence 602 is the time period between consecutive chirps. The lines 610-1, 610-2, 610-3, 610-4 illustrate the ending time of each chirp of the first plurality of chirps 602-1, 602-2, 602-3, 602-4, respectively (i.e., the line 610-1 illustrates the starting point of the dwell time between chirp 602-1 and chirp 602-2, and the ending point of the dwell time between chirp 602-1 and chirp 602-2 is when chirp 602-2 starts). On the y-axis of graph 600, X represents the center frequency and X + B represents the center frequency (X) plus the chirp bandwidth (B).

Referring to graph 620, the second chirp sequence 622 includes a second plurality of chirps 622-1, 522-2, 522-3, 522-4. The dwell time in the second chirp sequence 622 is the time period between consecutive chirps. For example, the dwell time 624-1 is between the first chirp 622-1 and the second chirp 622-2, the dwell time 624-2 is between the second chirp 622-2 and the third chirp 622-3, and the dwell time 624-3 is between the third chirp 622-3 and the fourth chirp 622-4. On the y-axis of graph 620, X represents the center frequency( X), and X+B(1+ Δ) represents the center frequency (X) plus the chirp bandwidth (B) as affected by the frequency offset (Δ) of the second chirp sequence 622 relative to the first chirp sequence 602.

As illustrated in FIG. 6, the corresponding chirps in the first chirp sequence 602 and the second chirp sequence 622 are more closely aligned with one another compared to the chirp sequences 502, 522 of FIG. 5. That is, by employing a different dwell time setting at each of the first and the second radar front ends, the radar system is able to achieve improved coherency between the radar front ends. The different dwell time setting is, at least in part, attributed to at least one of the radar front ends (e.g., the second radar front end corresponding to graph 620) employing an upconverter such as the upconverter 175 of FIG. 1 or the upconverter 402 of FIG. 4, to generate a higher frequency signal from the lower frequency reference clock signal received at the second radar front end. By upconverting the lower frequency reference clock signal to a higher frequency signal (e.g., such as one corresponding to the second signal 432 of FIG. 4), the timing engine of the radar front end is able to more finely tune the dwell times between the chirps in the second chirp sequence 622 so as to align the chirps more closely with the chirps in the first chirp sequence 602 within a tolerance threshold that is determined based on the frequency of the upconverted higher frequency signal. For example, a higher frequency signal of 640 MHz enables for the tuning of the dwell time between chirps in the second chirp sequence 622 at about a 1.5-1.6 nanosecond granularity , which corresponds to the tolerance threshold for aligning the chirps in the second chirp sequence 622 with those in the first chirp sequence 602. That is, in some embodiments, the tolerance threshold can be defined by 1/X, where X is the upconverted higher frequency. The timing engine in the second radar front end (as illustrated in FIG. 4), in some cases, sets the dwell times 624-2, 624-3 by modulating (e.g., increasing or decreasing) the number of clock cycles between the radar chirps 622-3, 622-4 so as to better align the radar chirps 622-3, 622-4 with the corresponding radar chirps 602-3, 602-4 of the first radar chirp sequence 602 in the time domain (i.e., along the x-axis). That is, the second radar front end provides this improved dwell time control due to the higher frequency second signal generated by the upconverter, which in turn allows the timing engine to control the dwell time between chirps at a finer resolution. For example, if the upconverter generates a 640 MHz signal from a 40 MHz reference clock signal, the second radar front end is able to modulate the dwell time between radar chirps at an approximately 1.5 nanosecond (ns) granularity as compared to a 25 ns granularity if only the 40 MHz reference clock signal is used. In addition, by using a higher frequency signal (e.g., the second signal 432 of FIG. 4), the second radar front end is also able to reduce or eliminate the frequency offset (Δ) with the first radar front end. Thus, the radar system that generates the chirp sequences shown in FIG. 6 employs an upconverter in at least one of the two radar front ends (e.g. as illustrated in FIG. 4) to achieve improved coherency in both the time and the frequency domain of the radar sequences generated at each of its two radar front ends. This increases the SNR of the received reflections, thereby improving radar system performance.

In some embodiments, the second radar front end corresponding to chart 620 modulates the dwell time 624 between chirps by a constant amount. In other embodiments, the second radar front end corresponding to chart 620 modulates the dwell time 624 between chirps by a dynamic amount. For example, the second radar front end modulates the dwell time based on the chirp number in the radar frame (e.g., later chirps have a larger dwell time between them, or the dwell time is increased every x number of chirps, where x is a positive integer larger than 1).

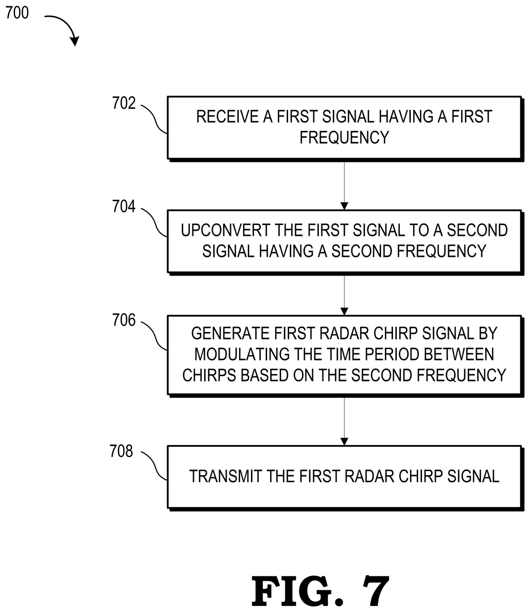

FIG. 7 shows an example of a flowchart 700 illustrating a method for generating a radar chirp signal based on a higher frequency signal to modulate the dwell time between chirps in accordance with some embodiments. In some aspects, the method illustrated in flowchart 700 is implemented by a radar front end such as the radar front end 400 of FIG. 4.

At block 702, the radar front end receives a first signal having a first frequency. For example, the upconverter 402 in the radar front end 400 receives a reference clock signal 430 having a frequency of 40 MHz from a reference clock source 470 of the radar front end 400.

At block 704, the upconverter in the radar front end upconverts the first signal to a second signal having a second frequency. For example, the upconverter 402 upconverts the reference clock signal 430 to the second signal 432 having a frequency of 640 MHz.

At block 706, the radar front end generates a first radar chirp signal by modulating the time period (or dwell time) between chirps based on the second frequency. For example, the chirp generator 404 in the radar front end 400 generates the radar chirp signal 438 based on the second signal 432 having a frequency of 640 MHz. That is, in some embodiments, the chirp generator 404 generates the radar chirp signal 438 based on the chirp timing control signal 435 received from the timing engine 408 in the digital hardware 406, where the chirp timing control signal 435 is generated based on the second signal 432.

At block 708, the radar front end transmits the first radar chirp signal. For example, the radar front end 400 transmits the radar signal 440 from the transmit antenna 422 based on the radar chirp signal 438 generated at the chirp generator 404.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
upconverting, at an upconverter of a first radar front-end in a distributed radar system, a first signal having a first frequency to a second signal having a second frequency that is higher than the first frequency;
generating, at a chirp generator of the first radar front-end, a first radar chirp signal, wherein the chirp generator modulates a time period between consecutive chirps in the first radar chirp signal based on the second signal; and
transmitting the first radar chirp signal from the first radar front-end.

2. The method of claim 1, further comprising:
generating, at a chirp generator of a second radar front-end in the distributed radar system, a second radar chirp signal; and
transmitting the second radar chirp signal from the second radar front-end,
wherein the chirp generator of the first radar front-end modulates the time period between consecutive chirps in the first radar chirp signal based on the second signal and a start time of chirps in the second radar chirp signal.

3. The method of claim 2, wherein a start time of each chirp in the first radar chirp signal and a start time of a corresponding chirp in the second radar chirp signal are aligned with one another within a tolerance threshold determined based on the second frequency of the second signal, wherein the aligning is based on the second frequency at the first radar front-end.

4. The method of claim 3, wherein the tolerance threshold is less than 2 nanoseconds.

5. The method of any of claims 2 to 4, wherein the first radar front-end and the second radar front-end have different dwell time settings, wherein a dwell time setting of the first radar front-end is set based on aligning chirps of the first radar chirp signal with chirps of the second radar chirp signal.

6. The method of any of claims 2 to 5, further comprising:
modulating a dwell time of the first radar front end based on the second signal and on a frequency of the second radar chirp signal.

7. The method of claim 6, wherein a center frequency of chirps in the first radar chirp signal and a center frequency of chirps in the second radar chirp signal are aligned with one another within a frequency threshold, based on a measured reference clock frequency offset between the first radar front end and the second radar front end.

8. The method of any preceding claim, further comprising:
receiving a reflected radar signal at the first radar front-end; and
sampling, at an analog-to-digital converter (ADC) of the first radar front-end, the reflected radar signal at a sampling frequency that is based on the second signal.

9. A radar front end comprising:
an upconverter configured to:
receive a first signal from a reference clock source of the radar front end, wherein the first signal has a first frequency, and
upconvert the first signal to a second signal having a second frequency;
a chirp generator configured to:
generate a first radar chirp signal by modulating a time period between consecutive chirps in the first radar chirp signal based on the second signal; and
a transmitter configured to transmit the first radar chirp signal.

10. The radar front end of claim 9, further comprising:
a digital hardware configured to provide a timing signal to modulate the time period between the consecutive chirps of the first radar chirp signal generated by the chirp generator based on the second signal.

11. The radar front end of claim 9 or 10, further comprising:
an analog-to-digital converter, ADC, configured to sample a reflected signal received at the radar front end at start sampling moments based on the second signal.

12. The radar front end of any of claims 9 to 11, wherein the time period between consecutive chirps in the first radar chirp signal is modulated to be a constant time period.

13. The radar front end of any of claims 9 ot 12, wherein a first time period between a first pair of consecutive chirps in the first radar chirp signal is modulated to be a first length of time, and wherein a second time period between a second pair of consecutive chirps in the first radar chirp signal is modulated to be a second length of time different than the first length of time by adjusting a number of clock cycles between the second pair of consecutive chirps.

14. The radar front end of claim 10, or any of claims 11 to 13 when depending from claim 10, wherein the chirp generator is further configured to modulate a frequency of the first radar chirp signal based on the second signal.

15. The radar front end of claim 10, or any of claims 11 to 13 when depending from claim 10, wherein the upconverter of the radar front-end comprises a first phase-locked loop, PLL, circuitry, and wherein the chirp generator of the radar front-end comprises a second PLL circuitry different than the first PLL.
